# FASCICULE DE BREVET EUROPEEN

(11) **EP 1 505 820 B1**
(45) Date de publication et mention de la délivrance du brevet: **25.11.2009**
(21) Numéro de dépôt: 04017941.8
(22) Date de dépôt: 29.07.2004
(51) Int. Cl.: H04M 19/08, H04L 12/10, H04L 12/44

(54) **Procédé de télé-alimentation d'un équipement de télécommunications et système de mise en oeuvre**
System und Verfahren zur Fernspeisung einer Telekommunikationsanlage
System and Method for remote feeding of a telecommunication equipment

(30) Priorité: 05.08.2003 FR 0309634
(43) Date de publication de la demande: 09.02.2005
(73) Titulaire: FRANCE TELECOM, 75015 Paris (FR)
(72) Inventeur: Marquet, Didier, 92240 Malakoff (FR)
(74) Mandataire: Vannini, Torquato

(56) Documents cités:
- EP-A- 0 668 688
- EP-A- 1 100 226
- WO-A-01/13621
- US-B1- 6 577 882

## Description

L'invention concerne un procédé d'alimentation électrique d'un équipement de télécommunications en liaison avec un réseau de télécommunications et avec au moins une installation client.

L'invention concerne également un système de mise en oeuvre du procédé.

La liaison avec le réseau de télécommunications peut être soit une liaison hertzienne soit une liaison filaire ou optique.

Le réseau de télécommunications peut être un réseau numérique (RNIS) ou un réseau téléphonique commuté (RTC).

Les liaisons filaires reliant l'équipement de télécommunications à l'installation client sont des lignes à deux conducteurs, ces lignes peuvent être des câbles coaxiaux ou des lignes téléphoniques (ou paires téléphoniques).

Ces liaisons filaires permettent dans le cas du réseau téléphonique commuté à la fois la transmission de la voix (l'application téléphonie) et la transmission de données à haut débit (xDSL).

D'une manière générale tout équipement de télécommunications nécessite une alimentation électrique. Selon l'équipement il s'agit d'une alimentation secteur c'est-à-dire de l'alimentation fournie directement par le réseau électrique soit une alimentation basse tension fournie par un adaptateur branché sur ce réseau électrique.

En général, lorsque l'équipement est chez un client, il est alimenté directement ou indirectement par le réseau électrique du client.

Les équipements déportés c'est-à-dire placés sur le réseau de télécommunications d'un opérateur téléphonique, sont alimentés localement par le réseau électrique de l'opérateur de téléphonie.

De façon pratique, lorsque les équipements sont des circuits électroniques de certains postes téléphoniques, des terminaux tels que les modems xDSL, ces équipements sont alimentés localement chez le client par le secteur ou par une liaison d'ordinateur (port USB par exemple).

Lorsque les équipements sont des équipements actifs déportés du réseau de télécommunications (xDSL, ...), on prévoit une télé-alimentation depuis les centres de télécommunications. Cette solution est en cours d'étude. En effet, il est prévu à ce jour que des paires du réseau téléphonique soient dédiées à la télé-alimentation des équipements de conversion optique-électrique. Ainsi ces équipements pourront être télé-alimentés à partir du centre téléphonique de rattachement à partir d'une ligne dédiée (paire de fils) du réseau téléphonique, ou alimentés par une alimentation secteur avec en outre une batterie de secours.

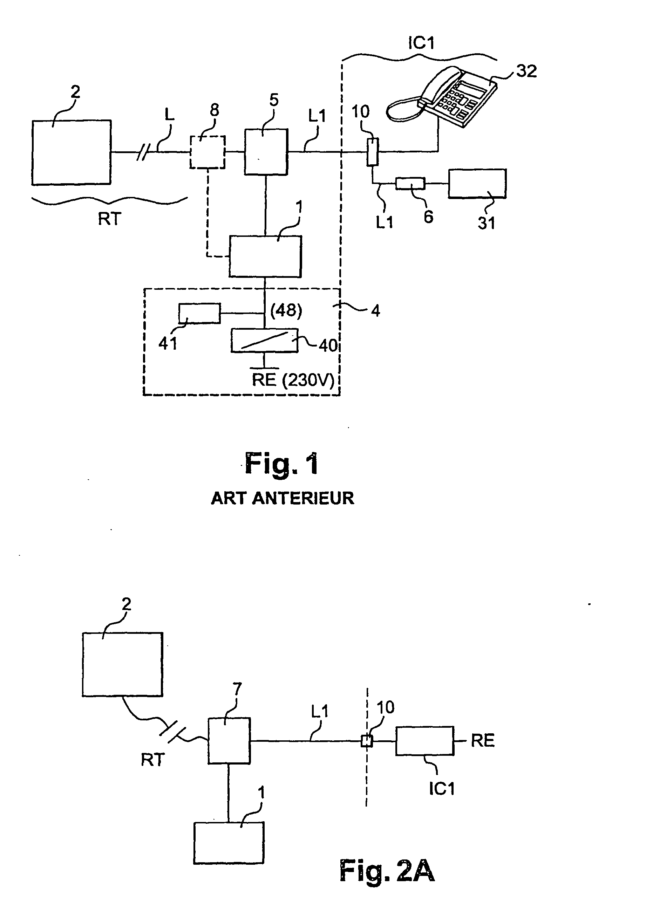

A ce jour de tels équipements (c'est-à-dire déportés dans le réseau) sont alimentés selon le principe du schéma de la figure 1. Cette figure 1 illustre par conséquent l'art antérieur concernant l'alimentation d'un équipement actif déporté du réseau téléphonique commuté et couplé à ce dernier.

L'équipement 1 est raccordé à un point d'interconnexion 5 entre le réseau téléphonique RT et une ligne téléphonique L1 desservant l'installation IC1 d'un client rattaché au centre de télécommunication 2 de ce réseau RT.

L'équipement 1 est alimenté par l'alimentation 4 qui comprend un module d'alimentation 40 (fournissant généralement 48V) relié au secteur du réseau électrique (230V) et un module de type batterie 41.

L'installation client illustrée sur cette figure comprend un terminal de télécommunication 31 de type ordinateur relié au réseau téléphonique à travers un filtre DSL 6, relié au moyen d'un connecteur 10 à la ligne L1 du réseau téléphonique. Le connecteur 10 peut être une simple prise téléphonique ou une réglette ou une réglette de répartition ou un sous répartiteur.

Bien entendu d'autres terminaux tel qu'un poste téléphonique 32 peuvent être bien évidemment reliés au réseau par cette même ligne L1.

L'alimentation 4 locale (sur secteur à l'emplacement de l'équipement : voir figure 1) nécessite un point de raccordement au réseau électrique et parfois des travaux pour tirer la ligne et un abonnement coûteux au fournisseur d'électricité.

En outre l'alimentation par le secteur véhicule des surtensions dues à la foudre qui peuvent déclencher intempestivement le disjoncteur d'arrivée et détruire l'équipement 1 alimenté.

Par ailleurs, la sécurisation par batterie dans le cas d'une Alimentation Sans Interruption (ASI) par rapport aux coupures d'électricité est possible mais nécessite de la surveillance et de la maintenance. L'accès aux équipements est difficile et l'intervention est coûteuse.

Dans le cas d'une télé-alimentation par le centre de télécommunication 2, il s'avère qu'il n'est pas toujours possible d'effectuer cette télé-alimentation par des paires téléphoniques dédiées du réseau téléphonique depuis le centre de télécommunications, car il arrive qu'il n'y ait pas assez de paires disponibles ou bien que la distance soit trop longue pour transmettre la puissance. Les fortes pertes d'énergie en ligne et les travaux importants de repérage des paires de télé-alimentation rendent cette solution trop chère.

On pourra également se reporter à l'état de la technique constitué par le document EP-A-1 100 226 du 16 Mai 2001 qui décrit un système de téléalimentation de terminaux téléphoniques connectés à un réseau local informatique.

L'invention a pour but de remédier à ces inconvénients et de proposer une solution simple, peu onéreuse en frais d'installation.

Le terme équipement de télécommunications doit être compris au sens large c'est-à-dire qu'il peut s'agir d'un équipement pouvant comprendre un ou plusieurs blocs fonctionnels : électroniques, thermiques, optiques susceptibles de requérir une alimentation électrique.

L'invention s'applique notamment à un panier (« rack ») VDSL comprenant une carte électronique modem VDSL, une carte électronique de conversion du signal issu d'une fibre optique en signal électrique, des filtres actifs de couplage entre réseau commuté et signaux haut débit issus du module de conversion, une carte de gestion thermique. D'autres cartes électroniques peuvent bien évidemment être rajoutées dans le « rack » et nécessiter une alimentation électrique.

L'invention a pour premier objet un procédé d'alimentation électrique d'un équipement de télécommunications couplé au réseau et relié à au moins une installation selon la revendication 1.

Lorsque l'équipement de télécommunications est relié à plusieurs installations clients cet équipement est télé-alimenté au moyen de la liaison filaire de chaque client.

Avantageusement, le procédé consiste à limiter la puissance fournie par chaque liaison filaire selon la longueur de la liaison afin de ne pas défavoriser les lignes les plus courtes.

Selon une autre caractéristique, le procédé consiste à prévoir une deuxième source d'alimentation électrique reliée directement à l'équipement pour un usage en tant que secours ou en complément.

Lorsque le ou un des terminaux de télécommunications d'une installation client est un poste téléphonique, la télé-alimentation par la liaison filaire client n'a lieu qu'en dehors des périodes décrochage - raccrochage du poste téléphonique, dans le cas où cette liaison filaire est la ligne téléphonique client ces périodes correspondant à une occupation de la ligne téléphonique pour une conversation téléphonique.

Selon une autre caractéristique, le procédé consiste à détecter les décrochages-raccrochages d'un poste téléphonique.

La détection des décrochages-raccrochages sur une ligne téléphonique client donnée consiste à mettre en oeuvre périodiquement une séquence de détection sur cette ligne.

Une séquence de détection sur une ligne téléphonique client consiste à baisser la tension de télé-alimentation Ug pendant une courte durée dt, à mesurer le courant qui passe sur la ligne téléphonique suite à cette baisse de tension, à arrêter la télé-alimentation sur cette ligne téléphonique si ce courant est supérieur à un seuil So prédéterminé car dans ce cas cela signifie qu'un poste téléphonique raccordé à cette ligne est décroché.

Avantageusement, les séquences de détection mises en oeuvre sur chaque ligne téléphonique client sont désynchronisées.

Lorsqu'un poste téléphonique d'une installation client donnée est décroché, le procédé consiste à permettre la télé-alimentation par une plusieurs autres lignes téléphoniques clients d'installations desservies par l'équipement.

L'invention a également pour objet un système d'alimentation électrique d'un équipement de télécommunications, cet équipement étant couplé au réseau de télécommunications et relié à une installation client comprenant une liaison filaire client pour raccorder un ou plusieurs terminaux de télécommunications au réseau, l'équipement étant placé à un point d'interconnexion du réseau de télécommunications et de la liaison filaire client principalement caractérisé en ce qu'il comprend un module d'alimentation dit module émetteur de télé-alimentation placé dans l'installation client et qui permet de télé-alimenter électriquement l'équipement à partir de la liaison filaire client.

La liaison filaire client est une ligne à deux conducteurs. Il peut s'agir d'une ligne téléphonique ou d'un câble coaxial.

Dans le cas où le réseau de télécommunications est le réseau de téléphonie commuté, la liaison filaire est une ligne téléphonique client.

La ligne téléphonique utilisée est la ligne téléphonique qui transporte le signal téléphonie ou une ligne téléphonique client dédiée au transport de l'énergie de télé-alimentation.

Le module émetteur de télé-alimentation comprend un convertisseur adaptateur de tension branché sur le réseau électrique client et un circuit de commande.

Le circuit de commande comprend un circuit de limitation de la puissance de la télé-alimentation selon la longueur de la liaison filaire.

Le circuit de commande peut comporter en outre un circuit de mise en oeuvre d'une séquence de détection des décrochages raccrochage lorsque la liaison filaire est une ligne téléphonique raccordée à un poste téléphonique de l'installation client.

Avantageusement le circuit de limitation de la puissance et le circuit de mise en oeuvre d'une séquence de détection des décrochages raccrochage sont réalisé par un microcontrôleur programmé à cet effet.

Le module émetteur de télé-alimentation est couplé à la liaison filaire.

Dans le cas où cette liaison filaire est une ligne téléphonique, le module émetteur de télé-alimentation est couplé à la ligne téléphonique client au moyen d'une prise téléphonique de type gigogne ou intégré dans cette dernière.

Dans le cas où l'installation client comprend au moins un terminal de télécommunications haut débit, le module émetteur de télé-alimentation est couplé à la ligne téléphonique à travers le modem du terminal haut débit.

Le point d'interconnexion est réalisé par une interface de connexion comportant un module d'alimentation dit : "module récepteur de télé-alimentation" apte à fournir à partir de la télé-alimentation fournie par l'installation client, une alimentation constante à l'équipement.

L'interface de connexion comprend ou est relié en outre une autre source d'alimentation pour l'équipement.

Cette source peut être une alimentation électrique secteur ou solaire ou éventuellement une batterie de secours.

Dans le cas où le réseau de télécommunications est le réseau téléphonique commuté, l'interface de connexion comprend un module interface téléphonique pour assurer une connexion directe de tout poste téléphonique d'une installation client au centre de télécommunications de rattachement pendant les périodes de décrochage-raccrochage de ces postes téléphoniques.

Le module interface téléphonique comporte un relais inverseur (électromécanique ou électronique).

Le module interface téléphonique comprend un dispositif "bypass" pour laisser passer le signal alternatif sur la ligne c'est-à-dire le signal de sonnerie et les signaux haut débit.

Le module interface téléphonique comporte un coupleur d'arrivée des paires de fils formant chaque ligne téléphonique client pour additionner les puissances reçues et empêcher le retour de courant vers les modules émetteurs de télé-alimentation.

Le coupleur comporte une diode placée sur un fil de chaque paire.

Le module interface téléphonique comprend un détecteur de décrochage d'un poste téléphonique.

Ce détecteur de décrochage comporte un détecteur de tension de ligne téléphonique client et ou de courant de ligne téléphonique client.

Le module interface téléphonique comporte un détecteur de raccrochage d'un poste téléphonique.

Ce détecteur de raccrochage comporte un détecteur de courant de ligne réseau.

D'autres particularités et avantages de la présente invention apparaîtront clairement à la lecture de la description qui est faite ci-après et qui est donnée à titre d'exemple non limitatif en regard des dessins sur lesquels :
- la figure 1 représente un schéma concernant un système d'alimentation électrique d'un équipement selon l'art antérieur,
- la figure 2A représente un schéma de principe d'un système d'alimentation électrique d'un équipement selon la présente invention,
- la figure 2A représente un schéma plus détaillé d'un système d'alimentation électrique d'un équipement de télécommunications appliqué au cas par exemple d'un réseau de télécommunications comprenant une liaison filaire avec un centre de télécommunications.

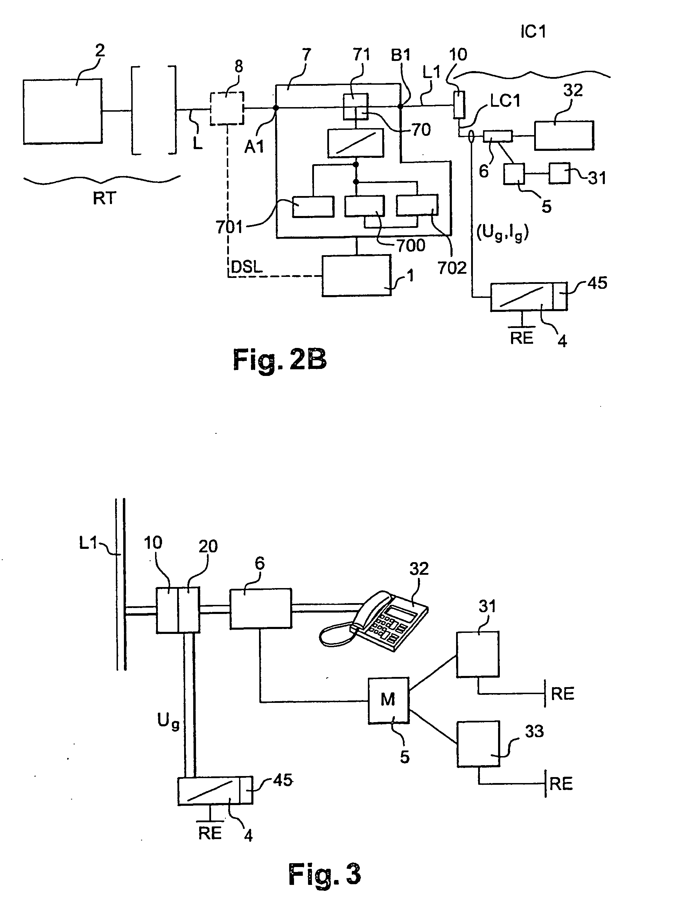

- la figure 3 représente un schéma d'un exemple d'installation téléphonique comprenant un module émetteur de télé-alimentation correspondant à un premier mode de réalisation,

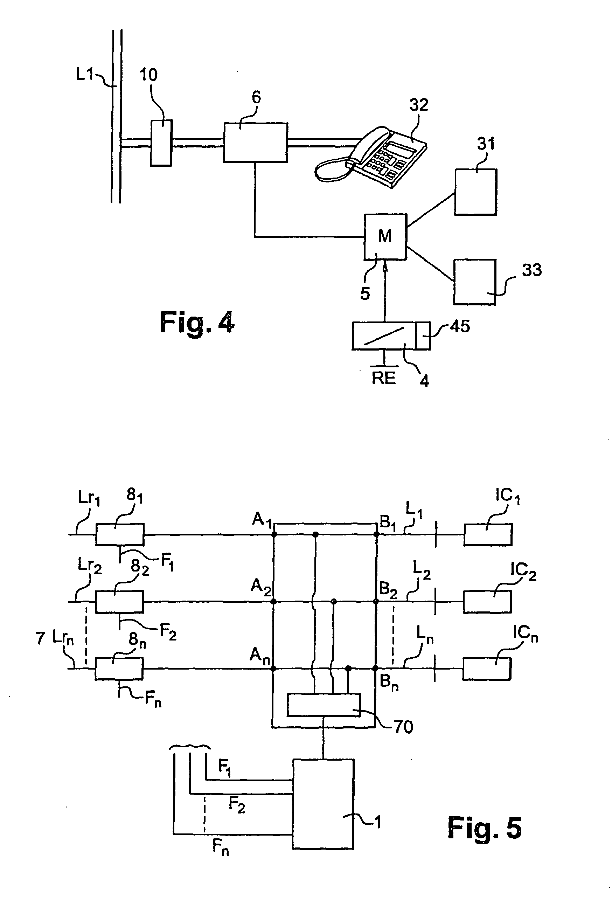

- La figure 4 représente un schéma d'un exemple d'installation téléphonique comprenant un module de télé-alimentation correspondant à un deuxième mode de réalisation,
- La figure 5 représente un schéma de principe du module récepteur de télé-alimentation généralisé à n lignes dépendant du même équipement 1,

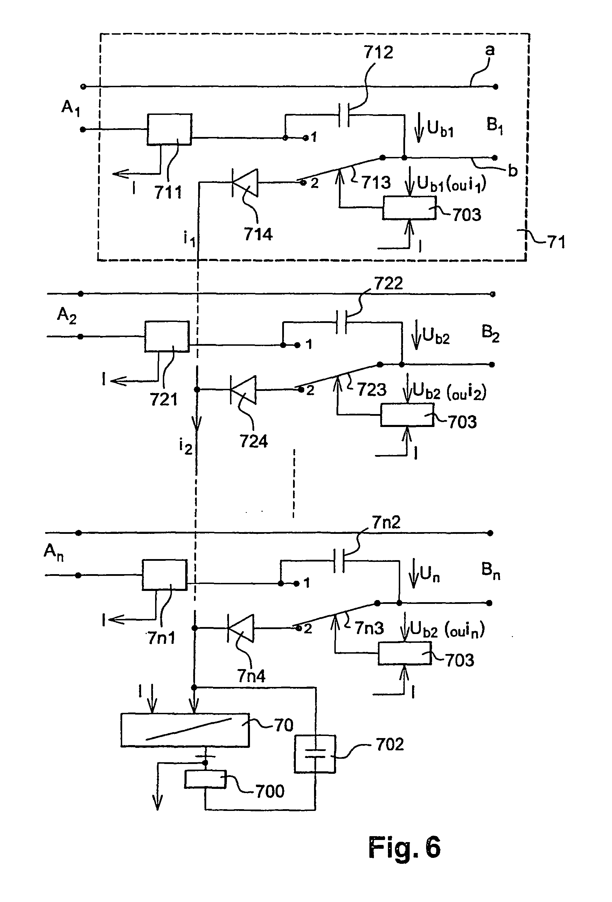

- La figure 6 représente un schéma détaillé du module récepteur de télé-alimentation de la figure 5,

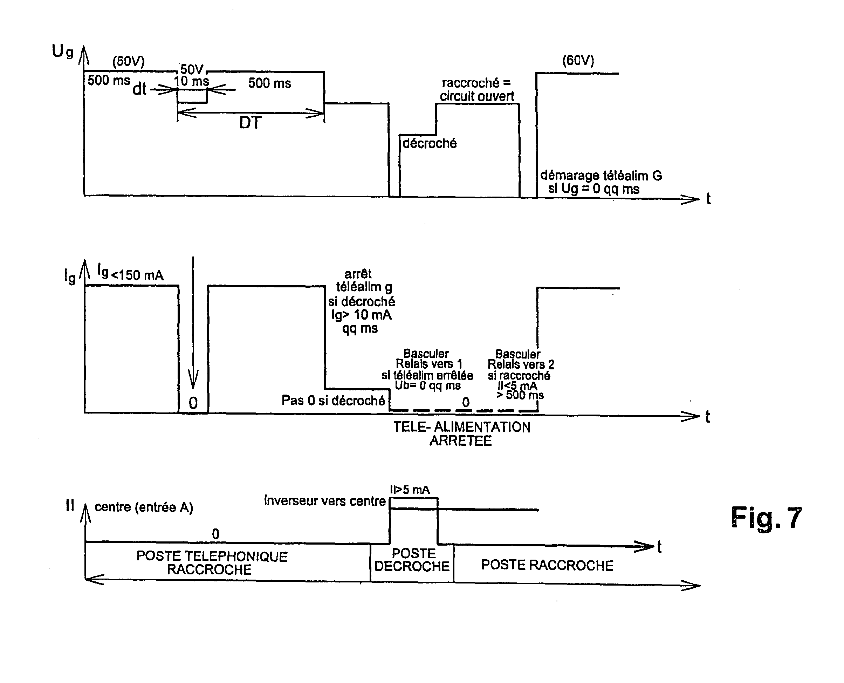

- la figure 7 représente un chronogramme de la tension d'alimentation Ug, du courant Ig fournis par un module émetteur et du courant de ligne I1.

La figure 2A illustre le système de télé-alimentation permettant de mettre en oeuvre le procédé selon l'invention.

Sur cette figure, l'équipement de télécommunications 1 dessert une installation IC1 d'un client du réseau de télécommunications sur lequel l'équipement 1 est implanté.

Comme on le verra dans la suite, l'invention s'applique avantageusement au cas où plusieurs installations téléphoniques IC1 à ICn sont desservies par ce même équipement 1.

Cet équipement est couplé au réseau de télécommunications par une liaison qui peut être de nature différente selon la nature de la transmission. Il peut s'agir d'une liaison filaire pour une liaison avec un centre de télécommunications ou par faisceau Hertziens pour une liaison avec un satellite.

L'équipement de télécommunications 1 peut être par exemple une carte xDSL offrant le haut débit à plusieurs clients.

La figure 2B représente une réalisation plus détaillée de l'invention appliquée au cas d'un équipement 1 couplé au réseau de télécommunications par liaison filaire.

L'équipement est couplé à la ligne Lr réseau, du réseau RT à travers un filtre DSL 8.

Dans cet exemple l'installation client IC1 comprend (tout comme dans l'exemple donné à propos de la figure 1) un terminal de télécommunication 31 connecté à la ligne client L1 au moyen connecteur 10 (prise téléphonique ou réglette de répartiteur ou sous répartiteur) à travers un modem 5 et un filtre "DSL" référencé 6 sur cette figure. Le terminal 31 représenté dans cet exemple est un ordinateur possédant une liaison haut débit de type xDSL.

Le terminal 32 est relié à la ligne client L1 au moyen du connecteur 10 à travers le filtre 6. Il s'agit par exemple d'un poste téléphonique.

Selon l'invention, l'installation client IC1 comporte en outre un module d'alimentation électrique 4 (dénommé ci-après module émetteur de télé-alimentation 4). Ce module 4 permet de fournir une alimentation électrique (Ug,Ig) à la ligne téléphonique client L1 à travers l'installation IC1.

Dans le cas où le réseau de télécommunication est le réseau téléphonique commuté, l'alimentation électrique fournie par ce module émetteur sera une alimentation continue basse tension. Dans d'autres cas de réseaux il pourra s'agir d'une alimentation en courant alternatif.

La ligne client L1 est avantageusement la ligne utilisée pour le transport du signal de communication mais il peut s'agir également d'une liaison filaire dédiée ou d'une paire de fils supplémentaire de ligne téléphonique non utilisée pour le transport du signal.

Le module émetteur de télé-alimentation 4 est réalisé par exemple par un transformateur adaptateur branché sur une prise du réseau électrique RE client. Ce module permet d'injecter un niveau de puissance convenable à une distance de plusieurs centaines de mètres sur une paire de cuivre utilisée pour les télécommunications ayant en général une section de 0,4 à 0,8 mm.

Dans l'exemple de réalisation, le module 4 permet de présenter en sortie une tension de 60V qui est suffisante pour envoyer 10 W à 200 mètres sur une paire de cuivre de 0,4 mm de section.

Selon l'invention, le point d'interconnexion au réseau de télécommunications pour l'équipement 1 se situe proche de l'installation client. Ce point peut se situer dans l'armoire d'un sous répartiteur placé dans la voie publique ou au niveau des réglettes d'immeubles du réseau de télécommunications dans les parties communes (gaines technique d'immeubles).

Une interface 7 réalise cette interconnexion et comporte à cette fin les entrées-sorties A1-B1 de connexion au réseau.

Selon l'invention cette interface possède un coupleur 71 et un module récepteur d'alimentation électrique 70 relié à la ligne client L1.

Le module récepteur de télé-alimentation 70 reçoit l'alimentation fournie par l'installation IC1 du client par la ligne client L1 et fournit une tension d'alimentation stable U à l'équipement 1. Ce module récepteur est réalisé par un convertisseur de tension 70 transformant la tension d'arrivée variable en fonction de la longueur de la ligne et du courant sur la ligne en une tension constante de préférence avec un seul niveau de conversion sans passer par une tension intermédiaire.

Le module comporte en outre une batterie de secours 700 reliée à un système 701 de gestion automatique de charge et de test afin de pouvoir la remplacer en cas de défaillance.

Selon la nature du réseau de télécommunications : réseau téléphonique commuté ou non, le couplage à la ligne réseau est réalisé soit par un coupleur 71 assurant la fonction interface téléphonique dans le cas du réseau téléphonique commuté soit par un simple coupleur 71 dans les autres cas.

Un exemple de réalisation de connecteur 71 assurant la fonction interface téléphone est détaillé dans la suite à propos de la figure 6.

Les figures 3 et 4 correspondent à deux modes de réalisation proposés pour réaliser l'injection de la télé-alimentation à partir du module émetteur de télé-alimentation 4 sur la ligne client L1.

Dans le premier exemple représenté sur la figure 3, l'injection est réalisée avantageusement par une prise téléphonique gigogne 20 branchée sur le connecteur 10 (prise téléphonique ou réglette ou sous répartiteur). Le module émetteur 4 peut être couplé à la prise 20 comme cela est représenté sur cette figure ou moulé dans la prise gigogne 20 ou intégré dans celle-ci.

Dans le deuxième exemple représenté sur la figure 4, l'injection est réalisée par le modem 5. De façon pratique, le module émetteur de télé-alimentation 4 peut être couplé au modem ou intégré dans ce dernier.

La figure 5 est une illustration de la généralisation de la télé-alimentation à partir de plusieurs installations téléphoniques client ICI à ICn (n clients) desservies par le même équipement 1.

Dans ce cas, l'interface d'interconnexion 7 comporte autant d'entrée-sortie A1-B1; An-Bn que de lignes client L1-Ln connectées aux lignes réseau Lr1; Lrn et autant de filtres DSL 81; 8n.

La figure 6 illustre un mode de réalisation de l'interface de connexion 7 pouvant être utilisé dans le cas de la mise en oeuvre de l'invention dans le réseau téléphonique commuté c'est à dire dans le cas où l'interface de connexion 7 est implantée sur le réseau téléphonique commuté.

En effet, il est nécessaire dans ce cas de gérer les décrochages et raccrochages d'un poste téléphonique dans une installation pour arrêter la télé-alimentation par le module émetteur de cette installation client pendant les conversations téléphoniques. Deux cas se présentent alors :
- Dans le cas où plusieurs installations client sont desservies par l'équipement de télécommunication, ce sont les autres modules émetteurs qui télé alimentent l'équipement 1.
- Dans le cas où une seule installation est desservie, l'alimentation de l'équipement peut être faite en local par le réseau électrique ou par une batterie de secours locale également sur le lieu de l'équipement 1.

Le système de télé-alimentation possède un détecteur de décrochage de poste téléphonique d'une installation pour laisser passer l'alimentation électrique issue du centre de télécommunication et alimenter ce poste téléphonique décroché et arrêter la télé-alimentation.

Le système de télé-alimentation comprend en outre un dispositif de détection du raccrochage pour redémarrer la télé-alimentation de l'équipement la ligne client.

Dans l'exemple de la figure 6, l'interface 7 comprend un coupleur composé d'autant de modules interface téléphonique 71-7n que d'installations IC1- ICn desservies par l'équipement 1.

Chaque module 71-7n est un quadripôle relié en entrée-sortie aux fils a, b des paires téléphoniques.

Sur le fil b de télé-alimentation de chaque module on a connecté un dispositif permettant de connecter directement un poste téléphonique au centre de télécommunications 2 uniquement pendant les communications et de ne jamais renvoyer de courant de télé-alimentation vers ce centre 2. Ce dispositif est réalisé au moyen d'un relais inverseur, 713 pour le premier module, et 7n3 pour le nième module.

On va décrire le cas d'un décrochage-raccrochage d'un poste téléphonique de l'installation ICI.

Le principe reste le même que le phénomène se produise sur une ou plusieurs installations clients.

Le relais 713 est en position 1 lorsqu'un courant de ligne venant du centre 2 est présent sur la ligne L. La télé-alimentation par le module émetteur de cette installation est arrêtée. L'équipement 1 est alors alimenté par les autres modules émetteurs.

Le relais passe dans la position 2 dès qu'il n'y a plus de courant en provenance du centre, ceci permet de re introduire la télé-alimentation de l'équipement par cette installation client.

L'alimentation fournie en entrée B1 ou Bn est à titre d'exemple une tension Ub1; Ubn de 60 V avec un courant il; in de 150 mA.

Les tensions Ub1, Ub2,... Ubn et/ou les courants peuvent être ajusté(e)s et donc différent(e)s d'une installation sur l'autre afin de tenir compte de la longueur de ligne client pour ne pas que ce soit la ligne client la plus courte qui le plus de puissance.

Un circuit électronique placé dans le module émetteur de télé alimentation 4 permet d'effectuer les ajustements du courant ou de la tension, selon la longueur de la ligne servant à la télé-alimentation. Ce circuit est réalisé par exemple par le microcontrôleur 45 servant à la mise en oeuvre des séquences test. Le circuit 45 est dans ce cas également programmé pour les ajustements de tension ou de courant.

Dans chaque module interface téléphonique 71, un dispositif 712- 7n2 permet de laisser passer le signal alternatif c'est à dire les signaux haut débit (xDSL) et le signal de sonnerie quelle que soit la position du relais 713-7n3.

Un coupleur d'arrivée des paires 714-7n4 est prévu pour additionner les puissances reçues et éviter le retour de courant vers le module émetteur de télé-alimentation 4. Ce coupleur peut être réalisé par des diodes 714-7n4 montées en circuit logique " OU ".

La détection du décrochage peut être réalisée par un détecteur de tension de ligne client de l'interface comprenant le module récepteur de télé-alimentation.

La détection du raccrochage peut être réalisée par détection du courant de ligne côté centre téléphonique dans l'interface comprenant le module d'alimentation récepteur.

De façon pratique, le courant pris en sortie des diodes 714-7n4 (courant sur la cathode) correspond au courant de télé-alimentation en provenance d'une installation téléphonique. Ce courant iₗ; iₙ est utilisé comme information pour la détection du décrochage d'un poste téléphonique.

Lorsque les postes téléphoniques d'une télé-alimentation sont raccrochés, la télé-alimentation est active. La sonnerie et le signal DSL passent par le « bypass » (condensateur 712 et la résistance 711). La résistance série est de quelques ohms et permet de limiter le pic de charge du condensateur lors de la commutation du relais.

Afin de détecter le décrochage d'un téléphone sur toute prise d'une installation client, on procède à des séquences de détection périodiques au niveau de l'installation client. Ces séquences de test sont mises en oeuvre par un circuit logique 45 de type microcontrôleur programmé à cet effet.

Une séquence consiste à baisser la tension d'un module émetteur de télé-alimentation de quelques Volts, toute les DT secondes (par exemple 500ms) pendant dt secondes (par exemple 10ms). Le courant de ligne passe alors à 0 car le module émetteur concerné est à une tension plus basse que celle qui est fournie par les autres. Si le courant de sortie de la télé-alimentation est significatif par exemple supérieur à 5mA, on peut en déduire qu'un téléphone est décroché et on arrête alors la télé alimentation par le module émetteur concerné.

Avantageusement, un dispositif de stockage 702 est prévu pour maintenir ces conditions de test quelque soit le nombre d'installation client (1 ou 2 ou 3, ...n). Ce dispositif peut être réalisé par un condensateur relié entre le point commun des diodes 714-7n4 et le pôle commun C d'alimentation batterie. Pour les exemples de valeur de tension, de courant et de durée choisies pour observer un décrochage raccrochage, la valeur du condensateur pourra être égale à 1,5 mF (milli Farad).

Le chronogramme de la figure 7 montre :
- les variations de la tension de télé-alimentation Ug fournie par le module émetteur (c'est-à-dire la tension de ligne client),
- les variations du courant de ligne client Ig;
- les variations du courant de ligne réseau Il fourni par le centre de télécommunication 2;
variations qui se produisent lors des séquences de détection, lorsque aucun poste n'est décroché puis lorsqu'un poste est décroché.

De préférence les séquences de détection sur les différents modules émetteurs de télé-alimentation sont désynchronisées. Ceci signifie que les télé-alimentions sont désynchronisées entre elles afin de rendre la détection plus précise. En effet, si les tensions des modules baissaient toutes en même temps, on ne pourrait pas avoir le déport de courant de l'une vers l'autre et le courant ne passerait pas à 0mA sur la ligne de télé-alimentation hors des séquences de détection.

Le décalage des horloges internes des modules d'alimentation émetteur peut suffire pour mettre en oeuvre ces séquences. Le signal d'horloge permettant de décaler ces séquences peut être le 50Hz du secteur par exemple.

Le courant et/ou la tension de ligne client (tension ou courant de télé-alimentation) sont lus côté module récepteur de télé-alimentation c'est-à-dire dans l'interface de connexion 7 par un circuit électronique 703. Le circuit électronique 703 peut être une électronique logique câblée (technologie CMOS par exemple) ou un microcontrôleur programmé pour piloter la commande automatique du relais 713 en fonctions des signaux reçus de ligne client L1 (valeur du courant Ig ou de la tension Ug) et de la ligne réseau Lr (courant Il).

Si la tension Ub1 (ou le courant) en entrée de l'interface 71 devient nulle pendant quelques ms car la télé-alimentation a été arrêtée suite à une prise de ligne : téléphone décroché; alors le relais 713 bascule en position 1 pour connecter l'installation téléphonique (et bien sur le téléphone décroché) directement au centre de télécommunication 2.

Tant que le courant de ligne réseau Il lu sur la résistance 711 est maintenu sans coupure plus de 500ms, le relais 713 commandé par le circuit 703 reste à l'état 1.

Si ce courant I1 de ligne réseau disparaît plus de 500ms la télé-alimentation redémarre et le relais 713 rebascule en position 2 c'est-à-dire en position de télé-alimentation.

Le module émetteur de la télé-alimentation redémarre dès que la télé-alimentation Ug de la ligne client, est nulle quelque ms.

A titre d'exemple l'équipement xDSL est télé-alimenté à travers un convertisseur 70 de 12 V et une batterie de type NiMH de 10 éléments de 1,2 V. La recharge est assurée par un élévateur de tension de 1,43 V maximum par élément. L'autonomie de 4 heures à 2 A est obtenue avec des éléments de capacité de 8 A h. La recharge s'effectue à courant limité à 0,5 A. La recharge prélève donc moins de 10 W. Lorsque la tension atteint 1,43 V par élément, la recharge est arrêtée et ne sera ré-enclenchée que toutes les 24h pendant 1h. La décharge est automatiquement mise en service si la télé-alimentation ne fournit plus assez de puissance. Elle est arrêtée si la tension atteint entre 1 et 1,1 V par élément pour ne pas détruire les éléments.

Périodiquement (tous les mois par exemple) un test est mis en oeuvre. La batterie 700 est mise en décharge en baissant la consigne de pilotage du convertisseur et on vérifie qu'il y a 1 h d'autonomie avec une tension supérieure à 1,2 V par élément, sinon on arrête la décharge, une boucle d'alarme à distance est fermée et une LED s'allume. Le test consiste aussi à contrôler la tension globale et la demi-tension. En cas de fort écart Ub-2xUb_{1/2} (supérieur à 0,5 V), on arrête la décharge et on génère également une alarme.

Le système de télé-alimentation qui vient d'être décrit est tout à fait compatible avec le cumul de plusieurs solutions permettant d'alimenter électriquement un équipement de télécommunications du réseau desservant une ou plusieurs installations client.

En effet, il peut tout à fait être envisagé de conserver une ou plusieurs sources d'alimentation en énergie locales et de leur adjoindre la solution de télé-alimentation qui vient d'être décrite.

Ces différentes sources locales peuvent être une alimentation secteur, une batterie, une alimentation solaire.

Ce cumul peut être intéressant soit en secours comme on l'a déjà vu lorsqu'il n'y a qu'une seule installation desservie par l'équipement ou bien pour rajouter un niveau de sécurité en apportant une redondance ou bien encore afin d'avoir des sources d'alimentation différentes pour les différentes parties de l'équipement (télé-alimention ligne client pour l'électronique et alimentation locale pour les autres parties (ventilateurs...).

## Revendications

1. Procédé d'alimentation électrique d'un équipement de télécommunications couplé à un réseau de télécommunications et relié à au moins une installation client (IC1) comprenant une liaison filaire client (L1) pour raccorder un ou plusieurs terminaux (31, 32) de télécommunications à ce réseau, l'équipement de télécommunications (1) étant placé à un point d'interconnexion (7) du réseau de télécommunications et de la liaison filaire client, le procédé consistant à télé-alimenter électriquement cet équipement (1) à partir des alimentations électriques placées dans les installations clients (RE) auxquelles l'équipement de télécommunication est relié au moyen de la liaison filaire client (L1); **caractérisé en ce que** lorsque l'équipement de télécommunications (1) est relié à plusieurs installations clients (IC1-ICn), le procédé consiste alors à télé-alimenter cet équipement (1) au moyen de la liaison filaire de chaque client, et **en ce qu'**il consiste en outre à limiter la puissance fournie par chaque liaison filaire selon la longueur de la liaison.

2. Procédé d'alimentation électrique d'un équipement de télécommunication selon la revendication 1, **caractérisé en ce que** lorsque le ou un des terminaux de télécommunications d'une installation client est un poste téléphonique, la télé-alimentation par la liaison filaire client n'a lieu qu'en dehors des périodes décrochage - raccrochage du poste téléphonique, dans le cas où cette liaison filaire est constituée par la ligne téléphonique client, ces périodes correspondant à une occupation de la ligne téléphonique pour une conversation téléphonique.

3. Procédé d'alimentation électrique d'un équipement de télécommunications selon la revendication 2, **caractérisée en ce qu'**il consiste à détecter les décrochages-raccrochages d'un poste téléphonique; la détection des décrochages-raccrochages sur une ligne téléphonique client donnée consistant à mettre en oeuvre périodiquement une séquence de détection sur cette ligne.

4. Procédé d'alimentation électrique d'un équipement de télécommunications selon la revendication 3, **caractérisé en ce qu'**une séquence de détection sur une ligne téléphonique client consiste à baisser la tension de télé-alimentation Ug pendant une courte durée dt, à mesurer le courant qui passe sur la ligne téléphonique suite à cette baisse de tension, à arrêter la télé-alimentation sur cette ligne téléphonique si ce courant est supérieur à un seuil So prédéterminé car dans ce cas cela signifie qu'un poste téléphonique raccordé à cette ligne est décroché; les séquences de détection mises en oeuvre sur chaque ligne téléphonique client étant désynchronisées.

5. Procédé d'alimentation électrique d'un équipement de télécommunication selon les revendications 2 ou 3 ou 4, **caractérisé en ce qu'**il consiste, lorsqu'un poste téléphonique d'une installation client donnée est décroché, à permettre la télé-alimentation par une ou plusieurs autres lignes téléphoniques clients d'installations desservies par l'équipement.

6. Système d'alimentation électrique d'un équipement de télécommunications (1) couplé à un réseau de télécommunications (RT) et relié à au moins une installation client (IC1) comprenant une liaison filaire client (L1) pour raccorder un ou plusieurs terminaux (31, 32) de télécommunications à ce réseau, l'équipement de télécommunications (1) étant placé à un point d'interconnexion (7) du réseau de télécommunications et de la liaison filaire client, l'équipement (1) étant téléalimenté électriquement à partir des alimentations électriques placées dans les installations clients (RE) auxquelles l'équipement de télécommunications (1) est relié au moyen de la liaison filaire client (L1) ; **caractérisé en ce que** lorsque l'équipement de télécommunications (1) est relié à plusieurs installations clients (IC1-ICn), le système comprend un premier module d'alimentation dit module émetteur de téléalimentation (4) placé dans chaque installation client (IC1- ICn) pour téléalimenter électriquement l'équipement à partir des liaisons filaires client (L1-L2) et dans lequel est placé un circuit (45) permettant d'effectuer des ajustements du courant ou de la tension, selon la longueur de la liaison client servant à la téléalimentation; et **en ce que** le point d'interconnexion est réalisé par une interface de connexion (7) comportant un deuxième module d'alimentation dit "module récepteur de téléalimentation" (70) apte à fournir à partir de la téléalimentation fournie par les installations client, une alimentation constante à l'équipement.

7. Système d'alimentation électrique d'un équipement de télécommunications selon la revendication 6, **caractérisé en ce que** dans le cas où le réseau de télécommunications est le réseau de téléphonie commuté, la liaison filaire est une ligne téléphonique client et **en ce que** la ligne téléphonique utilisée est la ligne téléphonique qui transporte le signal téléphonie ou une ligne téléphonique client, dédiée au transport de l'énergie de télé-alimentation.

8. Système d'alimentation électrique d'un équipement de télécommunications selon l'une quelconque des revendications 6 à 7, **caractérisé en ce que** module émetteur de télé-alimentation (4) comprend un convertisseur adaptateur (4) de tension branché sur le réseau électrique client et un dispositif de commande (45) pour détecter le décrochage d'un téléphone sur une installation client et/ou ajuster le courant ou la tension selon la longueur de la ligne servant à la téléalimentation; le module émetteur de télé-alimentation (4) est couplé à la ligne téléphonique client à travers le modem du terminal haut débit, au moyen d'une prise téléphonique de type gigogne (20) ou intégré dans cette dernière.

9. Système d'alimentation électrique d'un équipement de télécommunications selon la revendication 7 ou 8, **caractérisé en ce que** dans le cas où le réseau de télécommunications est le réseau téléphonique commuté, l'interface de connexion (7) comprend un module interface téléphonique (71) pour assurer une connexion directe de tout poste téléphonique d'une installation client au centre de télécommunications de rattachement pendant les périodes de décrochage-raccrochage de ces postes téléphoniques.

10. Système d'alimentation électrique d'un équipement de télécommunications selon la revendication 9, **caractérisé en ce que** le module interface téléphonique (71) comporte :
- un relais inverseur (713);
- un dispositif "bypass" (712) pour laisser passer le signal alternatif sur la ligne c'est-à-dire le signal de sonnerie et les signaux haut débit;
- un coupleur d'arrivée des paires de fils (714) formant chaque ligne téléphonique client pour additionner les puissances reçues et empêcher le retour de courant vers les modules émetteurs de télé-alimentation, le coupleur comportant une diode (714) placée sur un fil de chaque paire;
- un détecteur de décrochage d'un poste téléphonique (703), ce détecteur de décrochage comportant un détecteur de tension de ligne téléphonique client et ou de courant de ligne téléphonique client;
- un détecteur de raccrochage d'un poste téléphonique (711, 703) ce détecteur de raccrochage comportant un détecteur de courant de ligne réseau (711, 703).

## Claims

1. Method for supplying electrical power to an item of telecommunication equipment coupled to a telecommunication network and connected to at least one client installation (IC1) comprising a client wire link (L1) in order to connect one or more telecommunication terminals (31, 32) to this network, the item of telecommunication equipment (1) being placed at an interconnection point (7) of the telecommunication network and of the client wire link, the method consisting in remotely supplying electrical power to this item of equipment (1) from electric power supplies placed in the client installations (RE) to which the item of telecommunication equipment is connected by means of the client wire link (L1); **characterized in that**, when the item of telecommunication equipment (1) is connected to several client installations (IC1-ICn), the method then consists in remotely supplying this equipment (1) by means of the wire link of each client, and **in that** it also consists in limiting the power supplied by each wire link according to the length of the link.

2. Method of supplying electrical power to an item of telecommunication equipment according to Claim 1, **characterized in that**, when the or one of the telecommunication terminals of a client installation is a telephone set, the remote supply via the client wire link only takes place outside the off-hook - on-hook periods of the telephone set, when this wire link consists of the client telephone line, these periods corresponding to a busying of the telephone line for a telephone conversation.

3. Method for supplying electrical power to an item of telecommunication equipment according to Claim 2, **characterized in that** it consists in detecting the off-hook - on-hook actions of a telephone set; the detection of the off-hooks - on-hooks on a given client telephone line consisting in periodically using a detection sequence on this line.

4. Method for supplying electrical power to an item of telecommunication equipment according to Claim 3, **characterized in that** a detection sequence on a client telephone line consists in lowering the remote power supply voltage Ug for a short period dt, in measuring the current that travels over the telephone line following this lowering of voltage, in shutting off the remote power supply on this telephone line if this current is higher than a predetermined threshold So because, in this case, it means that a telephone set connected to this line is off-hook; the detection sequences used on each client telephone line being desynchronized.

5. Method for supplying electrical power to an item of telecommunication equipment according to Claims 2 or 3 or 4, **characterized in that** it consists, when a telephone set of a given client installation is off-hook, in allowing the remote power supply via one or more other client telephone lines of installations served by the item of equipment.

6. System of supplying electrical power to an item of telecommunication equipment (1) coupled to a telecommunication network (RT) and connected to at least one client installation (ICl) comprising a client wire link (L1) for connecting one or more telecommunication terminals (31, 32) to this network, the item of telecommunication equipment (1) being placed at an interconnection point (7) of the telecommunication network and of the client wire link, the equipment (l) being remotely supplied with electrical power from electric power supplies placed in the client installations (RE) to which the item of telecommunication equipment (1) is connected by means of the client wire link (Ll); **characterized in that,** when the item of telecommunication equipment (1) is connected to several client installations (IC1-ICn), the system comprises a first power supply module called a remote power supply transmitter module (4) placed in each client installation (IC1-ICn) in order to remotely supply electric power to the item of equipment from client wire links (L1-L2) and in which a circuit (45) is placed making it possible to make adjustments to the current or to the voltage, depending on the length of the client link used for the remote power supply; and **in that** the interconnection point is made by a connection interface (7) comprising a second power supply module called "remote power supply receiver module" (70) capable of supplying, from the remote power supply provided by the client installations, a constant power supply to the item of equipment.

7. System of supplying electrical power to an item of telecommunication equipment according to Claim 6, **characterized in that**, if the telecommunication network is the switched telephone network, the wire link is a client telephone line and **in that** the telephone line used is the telephone line which transports the telephony signal or a client telephone line dedicated to the transport of the remote power supply energy.

8. System of supplying electrical power to an item of telecommunication equipment according to either one of Claims 6 to 7, **characterized in that** the remote power supply transmitter module (4) comprises a voltage adapter converter (4) connected to the client electric network and a control device (45) for detecting the off-hook action of a telephone on a client installation and/or adjusting the current or the voltage depending on the length of the line used for the remote power supply; the remote power supply transmitter module (4) is coupled to the client telephone line via the modem of the high bit-rate terminal, by means of an extension telephone plug (20) or incorporated into the latter.

9. System of supplying electrical power to an item of telecommunication equipment according to Claim 7 or 8, **characterized in that**, if the telecommunication network is the switched telephone network, the connection interface (7) comprises a telephone interface module (71) in order to provide a direct connection of any telephone set of a client installation to the local telecommunication centre for the off-hook - on-hook periods of these telephone sets.

10. System of supplying electrical power to an item of telecommunication equipment according to Claim 9, **characterized in that** the telephone interface module (71) comprises:
- a reverse current relay (713);
- a "bypass" device (712) for allowing the alternating current signal on the line to pass, that is to say the ringing signal and the high bit-rate signals;
- an input coupler (714) of the wire pairs forming each client telephone line in order to add the received powers together and prevent the current from returning to the remote power supply transmitter modules, the coupler comprising a diode (714) placed on one wire of each pair;
- a detector (703) of a telephone set being taken off the hook, this off-hook detector comprising a client telephone line voltage and/or a client telephone line current detector;
- a detector (711, 703) of a telephone set being placed on-hook, this on-hook detector comprising a network line current detector (711, 703).

## Patentansprüche

1. Verfahren für die Stromversorgung einer Telekommunikationsanlage, die mit einem Telekommunikationsnetz gekoppelt ist und mit wenigstens einer Kundenvorrichtung (IC1) verbunden ist, die eine Kunden-Drahtverbindung (L1) enthält, um ein oder mehrere Telekommunikationsendgeräte (31, 32) mit diesem Netz zu verbinden, wobei die Telekommunikationsanlage (1) an einem Zwischenverbindungspunkt (7) des Telekommunikationsnetzes und der Kunden-Drahtverbindung angeordnet ist, wobei das Verfahren darin besteht, diese Anlage (1) anhand von Stromversorgungen, die in den Kundenvorrichtungen (RE) angeordnet sind, mit denen die Telekommunikationsanlage über die Kunden-Drahtverbindung (Ll) verbunden ist, elektrisch fernzuversorgen; **dadurch gekennzeichnet, dass** dann, wenn die Telekommunikationsanlage (1) mit mehreren Kundenvorrichtungen (IC1-ICn) verbunden ist, das Verfahren darin besteht, diese Anlage (1) mittels der Drahtverbindung jedes Kunden fernzuversorgen, und dass es außerdem darin besteht, die von jeder Drahtverbindung gelieferte Leistung entsprechend der Länge der Verbindung zu begrenzen.

2. Verfahren für die Stromversorgung einer Telekommunikationsanlage nach Anspruch 1, **dadurch gekennzeichnet, dass** dann, wenn das oder die Telekommunikationsendgeräte einer Kundenvorrichtung ein Telephonapparat ist, die Fernversorgung über die Kunden-Drahtverbindung in dem Fall, in dem diese Drahtverbindung durch die Telephonleitung des Kunden gebildet ist, nur außerhalb von Perioden zwischen dem Abheben und dem Auflegen des Hörers des Telephonapparats erfolgt, wobei diese Perioden einer Belegung der Telephonleitung für ein Telephongespräch entsprechen.

3. Verfahren für die Stromversorgung einer Telekommunikationsanlage nach Anspruch 2, **dadurch gekennzeichnet, dass** es darin besteht, das Abheben/Auflegen des Hörers eines Telephonapparats zu detektieren; wobei die Detektion des Abhebens/Auflegens auf einer gegebenen Kunden-Telephonleitung darin besteht, periodisch eine Detektionssequenz auf dieser Leitung auszuführen.

4. Verfahren für die Stromversorgung einer Telekommunikationsanlage nach Anspruch 3, **dadurch gekennzeichnet, dass** eine Detektionssequenz auf einer Kunden-Telephonleitung darin besteht, die Fernversorgungsspannung Ug während einer kurzen Dauer dt abzusenken, den Strom, der in der Telephonleitung infolge dieser Spannungsabsenkung fließt, zu messen und die Fernversorgung auf dieser Telephonleitung anzuhalten, wenn dieser Strom größer als ein vorgegebener Schwellenwert So ist, weil dies in diesem Fall bedeutet, dass ein Telephonapparat, der mit dieser Leitung verbunden ist, abgenommen worden ist; wobei die Detektionssequenzen, die in jeder Kunden-Telephonleitung ausgeführt werden, nicht synchronisiert sind.

5. Verfahren für die Stromversorgung einer Telekommunikationsanlage nach den Ansprüchen 2 oder 3 oder 4, **dadurch gekennzeichnet, dass** es dann, wenn ein Telephonapparat einer gegebenen Kundenvorrichtung abgenommen worden ist, darin besteht, die Fernversorgung durch eine oder mehrere andere Kunden-Telephonleitungen von durch die Anlage bedienten Vorrichtungen zu ermöglichen.

6. System für die Stromversorgung einer Telekommunikationsanlage (l), die mit einem Telekommunikationsnetz (RT) gekoppelt ist und mit wenigstens einer Kundenvorrichtung (IC1) verbunden ist, die eine Kunden-Drahtverbindung (Ll) aufweist, um ein oder mehrere Telekommunikationsendgeräte (31, 32) mit diesem Netz zu verbinden, wobei die Telekommunikationsanlage (l) an einem Zwischenverbindungspunkt (7) des Telekommunikationsnetzes und der Kunden-Drahtverbindung angeordnet ist, wobei die Anlage (l) anhand von Stromversorgungen, die in den Kundenvorrichtungen (RE) angeordnet sind, mit denen die Telekommunikationsanlage (1) über die Kunden-Drahtverbindung (L1) verbunden ist, elektrisch fernversorgt wird; **dadurch gekennzeichnet, dass** dann, wenn die Telekommunikationsanlage (1) mit mehreren Kundenvorrichtungen (ICl-ICn) verbunden ist, das System ein erstes so genanntes Fernversorgungs-Sendermodul (4) enthält, das in jeder Kundenvorrichtung (ICl-ICn) angeordnet ist, um die Anlage anhand der Kunden-Drahtverbindungen (L1-L2) elektrisch fernzuversorgen, und in der eine Schaltung (45) angeordnet ist, die ermöglicht, Einstellungen des Stroms oder der Spannung entsprechend der Länge der der Fernversorgung dienenden Kundenverbindung auszuführen; und dass der Zwischenverbindungspunkt durch eine Verbindungsschnittstelle (7) verwirklicht ist, die ein zweites so genanntes "Fernversorgungs-Empfängermodul" (70) enthält, das anhand der von den Kundenvorrichtungen bereitgestellten Fernversorgung eine konstante Versorgung der Anlage schaffen kann.

7. System für die Stromversorgung einer Telekommunikationsanlage nach Anspruch 6, **dadurch gekennzeichnet, dass** in dem Fall, in dem das Telekommunikationsnetz ein vermitteltes Telephonnetz ist, die Drahtverbindung eine Kunden-Telephonleitung ist, und dass die verwendete Telephonleitung die Telephonleitung ist, die das Telephoniesignal transportiert, oder eine Kunden-Telephonleitung ist, die für den Transport von Fernversorgungsenergie vorgesehen ist.

8. System für die Stromversorgung einer Telekommunikationsanlage nach einem der Ansprüche 6 bis 7, **dadurch gekennzeichnet, dass** das Fernversorgungs-Sendermodul (4) einen Spannungsumsetzer/-anpasser (4) enthält, der an das Kundenstromnetz angeschlossen ist und eine Steuervorrichtung (45) enthält, um das Abheben eines Telephonhörers in einer Kundenvorrichtung zu detektieren und/oder um den Strom oder die Spannung entsprechend der Länge der der Fernversorgung dienenden Leitung einzustellen; wobei das Fernversorgungs-Sendermodul (4) mit der Kundentelephonleitung über das Modem des Endgeräts mit hohem Durchsatz mittels eines Telephonsteckers des Gigahertz-Typs (20) verbunden ist oder in dieses Letztere integriert ist.

9. System für die elektrischen Versorgung einer Telekommunikationsanlage nach Anspruch 7 oder 8, **dadurch gekennzeichnet, dass** in dem Fall, in dem das Telekommunikationsnetz das vermittelte Telephonnetz ist, die Verbindungsschnittstelle (7) ein Telephonschnittstellenmodul (71) enthält, um eine direkte Verbindung jedes Telephonapparats einer Kundenvorrichtung mit der Telekommunikationszentrale während der Perioden zwischen dem Abheben und Auflegen dieser Telephonapparate sicherzustellen.

10. System für die elektrischen Versorgung einer Telekommunikationsanlage nach Anspruch 9, **dadurch gekennzeichnet, dass** das Telephonschnittstellenmodul (71) enthält:
- ein Umschaltrelais (713);
- eine Bypass-Vorrichtung (712), um das Wechselstromsignal auf der Leitung, d. h. das Läutsignal und die Signale mit hohem Durchsatz, durchzulassen;
- einen Ankunftskoppler für Drahtpaare (714), die jede Kundentelephonleitung bilden, um die empfangenen Leistungen zu addieren und um die Rückkehr von Strom zu den Fernversorgungs-Sendermodulen zu verhindern, wobei der Koppler eine in einen Draht jedes Paars eingesetzte Diode (714) enthält;
- einen Detektor für das Abheben eines Telephonhörers (703), wobei dieser Abhebedetektor einen Detektor für die Spannung der Kundentelephonleitung und für den Strom der Kundentelephonleitung enthält;
- einen Detektor für das Auflegen eines Telephonhörers (711, 703), wobei dieser Auflegedetektor einen Detektor für den Strom der Netzleitung (711, 703) enthält.
